# EUROPÄISCHE PATENTSCHRIFT

(11) **EP 1 448 410 B1**
(45) Veröffentlichungstag und Bekanntmachung des Hinweises auf die Patenterteilung: **17.08.2005**
(21) Anmeldenummer: 02792731.8
(22) Anmeldetag: 05.11.2002
(51) Int. Cl.: B60R 21/01

(54) **AIRBAGVORRICHTUNG FÜR EIN FAHRZEUG, INSBESONDERE FÜR EIN KRAFTFAHRZEUG, UND SENSOR ZUR ORTS- UND/ODER ZEITAUFLÖSENDEN KRAFT- ODER DRUCKMESSUNG**
AIRBAG DEVICE FOR A VEHICLE, ESPECIALLY A MOTOR VEHICLE, AND SENSOR FOR LOCAL AND/OR TIME RESOLUTION FORCE OR PRESSURE MEASUREMENT
DISPOSITIF COUSSIN GONFLABLE DE PROTECTION POUR UN VEHICULE, NOTAMMENT POUR UN VEHICULE AUTOMOBILE, ET CAPTEUR POUR LA MESURE DE FORCE OU DE PRESSION A RESOLUTION SPATIALE OU TEMPORELLE

(30) Priorität: 17.11.2001 DE 10156652; 24.01.2002 DE 10202551
(43) Veröffentlichungstag der Anmeldung: 25.08.2004
(73) Patentinhaber: Volkswagen Aktiengesellschaft, 38436 Wolfsburg (DE)
(72) Erfinder: STRUTZ, Torsten, 38442 Wolfsburg (DE); SCHOFT, Axel, 38102 Braunschweig (DE)
(74) Vertreter: Liebl, Thomas
(86) Internationale Anmeldenummer: PCT/EP2002/012312
(87) Internationale Veröffentlichungsnummer: WO 2003/042008

(56) Entgegenhaltungen:
- DE-A- 19 826 484
- DE-A- 19 827 135
- DE-U- 20 014 200
- US-A- 4 795 998
- BILLEN K: "Occupant Classification System for Smart Restraint Systems" , SAE PAPER 1999-01-0761, XX, XX, PAGE(S) 33-38 XP002184965 das ganze Dokument

## Beschreibung

Die Erfindung betrifft eine Airbagvorrichtung für ein Fahrzeug, insbesondere für ein Kraftfahrzeug, nach dem Oberbegriff des Anspruchs 1.

Die Anforderungen an Airbagvorrichtungen in einem Fahrzeug werden immer größer. Ein einfaches Aufblasen bzw. Entfalten des Gassacks ist nicht mehr ausreichend. So ist es insbesondere im Hinblick auf sogenannte Out-of-position-Stellungen, bei denen sich der Fahrzeuginsasse außerhalb seiner normalen Sitzposition befindet, wünschenswert, dass der jeweilige Airbag nicht mit voller Wucht aufgeblasen wird, sondern mit reduziertem Gasvolumen.

Hierzu ist es bereits bekannt, an Airbagvorrichtungen Steuereinrichtungen vorzusehen, mit denen ein gesteuertes Aufblasen des Airbags erfolgen kann. Eine derartige Airbagvorrichtung ist z. B. aus der EP 0 812 741 bekannt, bei der ein Faden oder Band vorgesehen ist, der oder das an der Innenseite des dem Fahrzeuginsassen zugewandten Vorderteils des Airbags befestigt ist. Beim Füllen des Airbags folgt der Faden oder das Band dem Vorschub des sich entfaltenden Airbags, so dass die Vorschubbewegung des Gassacks erfassbar ist, z. B. über die Auszugslänge oder die Auszugszeit. Trifft das Vorderteil des Airbags auf ein Hindemis, z. B. einen sich Out-of-position befindlichen Fahrzeuginsassen, wird dies durch die gleichzeitige Verringerung der Vorschubbewegung des Fadens oder des Bandes erfassbar, so dass die Steuereinrichtung das weitere Befüllen des Airbags mit Gas unterbinden kann. Diese Airbagvorrichtung erlaubt es zwar prinzipiell, die Vorschubbewegung des sich entfaltenden Airbags zu unterbrechen, wenn das Vorderteil des Airbags auf ein Hindemis auftrifft. Die vorgesehene Erfassung der Vorschubbewegung mittels des Fadens oder des Bandes ist relativ kompliziert und wenig funktionssicher, wobei zudem auch das vollständige Abschalten der Gaszufuhr beim Auftreffen des Airbag-Vorderteils auf ein Hindernis für viele Unfallsituationen unerwünscht ist. Mit einem derartigen, wenig praktikablen Aufbau ist es somit nicht zuverlässig möglich, den Fahrzeuginsassen bei einem Unfall hinreichend zu schützen und ein aggressives Aufblasen des Airbags, insbesondere bei Out-of-position-Situationen auszuschließen.

Um diese Nachteile zu vermeiden, ist aus der gattungsgemäßen DE 198 27 135 A1 bereits eine Airbagvorrichtung mit einem durch eine Fülleinrichtung mit Gas aufblasbaren Airbag, der beim Aufblasen in den Fahrgastraum des Kraftfahrzeugs vorschiebbar ist und mit wenigstens einem, auf der sich dem Insassen zubewegenden Seite des Airbags befindlichen Sensorelement, bekannt. Das Sensorelement spricht auf lokale Druckänderungen an und leitet diese sensierten Druckänderungen als Sensorsignal an eine Steuereinrichtung weiter. Die Steuereinrichtung steuert die Fülleinrichtung durch ein Steuersignal, wobei die von der Fülleinrichtung gelieferte Gasmenge in Reaktion auf ein Sensorsignal, das von dem die Vorschubbewegung des Airbags erfassenden Sensorelement lieferbar ist, steuerbar ist.

Konkret ist an der sich auf den Insassen zubewegenden Seite des Airbags ein auf eine lokale Druckänderung ansprechendes, als Abtastmedium fungierendes Sensorelement angeordnet. Durch das Abtastmedium ist ein Sensorsignal erzeugbar, das die sensierte Druckänderung charakterisiert. Dieses Sensorsignal ist zu der die Fülleinrichtung steuemden Steuereinrichtung leitbar. In einer Weiterbildung sind eine Vielzahl von druckempfindlichen Sensorelementen vorgesehen, die über einen definierten Bereich an der sich auf den Insassen zubewegenden Seite des Airbags verteilt angeordnet sind. Nachteilig bei dieser Ausführung ist, dass jedes einzelne Sensorelement von der Vielzahl von Sensorelementen separat an dem Airbag befestigt werden muss. Zusätzlich muss von jedem einzelnen Sensorelement eine Steuerleitung zur Steuereinrichtung geführt werden, um die detektierten Sensorsignale an den Sensorelementen weiterleiten zu können. Dies ist ersichtlich aufwendig.

Weiter ist auch ein Sensor für einen Airbag einer Airbagvorrichtung aus der gattungsbildenden DE 198 26 484 bekannt. Der bekannte Sensor besteht aus einem in ein Gewebe eingebetteten matrixartigen Raster von leitfähigen Zeilenfasern und Spaltenfasern, wobei die Zeilenfasern und die Spaltenfasern an Kontaktstellen, welche an den Kreuzungsbereichen der Zeilen- und Spaltenfasern ausgebildet sind, jeweils lose übereinanderliegend angeordnet sind. Die Zeilenfasern und die Spaltenfasern sind als elastische Fasern aus Kohlefasern oder einem halbleitenden Polymer ausgebildet. Die Enden der Spalten- und Zeilenfäsern sind über elektrische Verbindungskabel mit einer Auswerteelektronik verbunden. Die Fasern sind elastisch und weisen eine hohe Biege- und Wölb-Flexibilität auf, um sich an eine Deformation des Gewebes anpassen zu können. Das Material der Spalten- und Zeilenfasern ist derart gewählt, dass ein Kontaktwiderstand zwischen einer Spaltenfaser und einer Zellenfaser von der Druckbeaufschlagung der Kontaktstelle abhängig ist. Wird eine solche Kontaktstelle druckbeaufschlagt, so verringert sich der Kontaktwiderstand zwischen der betreffenden Zeilenfaser und Spaltenfaser. Diese Widerstandsänderung wird durch die angeschlossene Auswerteelektronik erfasst, wodurch Druckänderungen an den Kontaktstellen ortsaufgelöst und/oder zeitaufgelöst gemessen werden können.

Bei dem bekannten Sensor sind die Spalten- und Zeilenfasern jeweils an ihren Enden mit Verbindungskabeln kontaktiert, über die der Sensor mit der Auswerteelektronik verbunden ist. Die als Spalten- bzw. Zeilenfasern verwendeten elastischen Kohlefasern oder Polymerfasern bilden gleichzeitig die elektrische Verbindung zwischen den elektrischen Verbindungskabeln und der Kontaktstelle, an der die zu messende Widerstandsänderung stattfindet. Elastische Kohlefasern oder Polymerfasern haben einen höheren spezifischen Widerstand als metallische Zuleitungen, wie sie in der Regel bei einer Widerstandsmessung als elektrische Verbindungen zwischen Messgeräten und der Stelle, an der gemessen ' werden soll, verwendet werden. Der hierdurch bedingte Messfehler ist zwar gering und die Messgenauigkeit in den meisten Anwendungsfällen völlig ausreichend. Es kann jedoch erforderlich sein, den Sensor für. Messungen einzusetzen, bei denen, wie z. B. in Verbindung mit Airbags, eine erhöhte Messgenauigkeit gefordert wird, welche beim Einsatz von Kohle- oder Polymerfasern als elektrische Verbindungen zwischen den Verbindungskabeln der Auswerteelektronik und den Kontaktstellen nicht erreicht wird. Der Einsatz von gut leitfähigen Metallfasern als Spalten- bzw. Zeilenfasern verbietet sich dabei aus dem Grund, da diese bei einer Deformation des Sensors, wie sie beispielsweise bei einer Anwendung des Sensors in einem Airbag für Kraftfahrzeuge vorkommen kann, leicht brechen oder reißen können und deshalb störanfällig sind und überdies leicht oxidieren, wobei eine Oxidation an einer Kontaktstelle das Messergebnis verfälscht.

Aus der DE 200 14 200 U1 ist ferner eine Sensoranordnung zur Messung der örtlichen Verteilung einer Messgröße bekannt, die als Sensorsitzmatte zur Sitzbelegungserkennung in einem Kraftfahrzeug ausgebildet ist. Diese Sensoranordnung umfasst mehrere verteilt angeordnete und matrixförmig zusammengeschaltete Sensorelemente, deren elektrisches Verhalten jeweils von dem örtlichen Wert der Messgröße P abhängig ist. Ferner sind mehrere mit den Sensorelementen verbundene elektrische Anschlüsse vorgesehen, um das elektrische Verhalten der einzelnen Sensorelemente durch ein Messgerät zu erfassen, wobei ein Teil des Sensorelements jeweils aus einer Reihenschaltung aus einem von dem Wert der Messgröße unabhängigen Vorschaltelement und einem von dem Wert der Messgröße abhängigen Messelement besteht. Eine Schaltungsanordnung zum Messen von matrixartig angeordneten Widerständen einer in einem Fahrzeugsitz zur Sitzbelegungserkennung angeordneten drucksensitiven Widerstandsmatte ist auch aus der DE 199 10 194 C2 bekannt.

Ähnliche Aufbauten sind auch aus der US 4,795,998 und aus Billen K. et al: "Occupant Classification System for Smart Restraint Systems", SAE Paper 1999-01-0761, XX, XX, Pages 33-38 XP 002184965 bekannt.

Weiter ist aus der DE 196 41 648 C1 eine Widerstandsmessschaltung bekannt, die zur Messung eines Widerstandes eines resistiven Sensorwiderstandselementes einsetzbar ist und die Messergebnisse in digitaler Form bereitstellt. Hierzu wird eine Reihenschaltung an einer Gleichspannung einer Gleichspannungsquelle angeschlossen, wobei die Reihenschaltung unter anderem Referenzwiderstandseinheiten aufweist, wobei jeder Referenzwiderstand und der Messwiderstand über ein jeweiliges von der Reihenschaltung abzweigendes Leiterpaar mit einer Analog-Multiplexerschaltung verbunden ist, die wechselweise jedes der Leiterpaare mit einem Kondensator verbindet, um den Kondensator jeweils auf eine den Spannungsabfall an dem jeweils angeschlossenen Widerstand repräsentierende Ladespannung aufzuladen und die nach jeweiliger Aufladung des Kondensators den Kondensator von dem betreffenden Leiterpaar trennt und mit einer einen Entladewiderstand enthaltenen Entladeschaltung verbindet, um den Kondensator zu entladen. Eine Zeitmessschaltung misst die Entladezeit bis zum Abfall der Kondensatorspannung auf einen vorbestimmten Wert und eine Steuer- und Auswerteschaltung berechnet den Widerstandswert des Messwiderstandes auf der Basis der Entladezeitmesswerte. Bei dem Messwiderstand handelt es sich um einen PT 100-Platinwiderstands-Temperaturfühler.

Aufgabe der Erfindung ist es, eine Airbagvorrichtung mit einem an einem Airbag angeordneten Sensorelement zu schaffen, das eine hohe Messgenauigkeit aufweist.

Diese Aufgabe wird mit den Merkmalen des Anspruchs 1 gelöst.

Gemäß Anspruch 1 ist zumindest eines der Widerstandselemente zumindest an einem der Kontaktbereiche durch ein an diesem Kontaktbereich mit dem Widerstandselement in elektrischem Kontakt befindliches elektrisch leitendes, niederohmiges Element spannungsbeaufschlagt ist, wobei die von der Fülleinrichtung gelieferte Gasmenge in Reaktion auf ein Sensorsignal, das von dem die Vorschubbewegung des Airbags erfassenden Elementen lieferbar ist, steuerbar ist.

Durch diese Maßnahmen wird in vorteilhafter Art und Weise erreicht, dass die Ableitung des eine Widerstandsänderung anzeigenden Signals von dem Kreuzungsbereich zweier Widerstandselemente zu einer elektrischen Anschlussleitung nicht über die Widerstandselemente selbst erfolgt, sondern über das niederohmige elektrisch leitende Element. Dies führt zu einer erhöhten Messgenauigkeit, auch wenn die Widerstandselemente aus einem flexiblen und dehnbaren elastischen Material gefertigt werden, welches zwar elektrisch leitend, aber relativ hochohmig ist.

Vorteilhaft lässt sich durch die Überkreuzverlegung der Sensorstreifen eine eindeutige Positionsbestimmung des auftreffenden Hindernisses auf den Airbag erreichen. Insbesondere bei mehreren nebeneinander verlegten und überkreuzten Sensorstreifen und damit der Ausbildung einer sogenannten Sensormatrix ist diese Positionsbestimmung einfach und genau möglich, da z. B. bestimmten Knoten- bzw. Überkreuzungspunkten bestimmten Positionskoordinaten ähnlich einem Koordinatensystem zugeordnet werden können. Dadurch ist eine besonders einfache lokale Zuordnung von aktuellen Crashparametem im Fahrzeuginnenraum, z. B. out-of-position-Situationen möglich.

Die Verkabelung der einzelnen Sensorstreifen ist ebenfalls gut durchführbar, da für jeden Sensorstreifen nur ein Anschluss nötig ist. Dadurch ist eine gezielt durchzuführende Reaktion der Fülleinrichtung über die Steuereinrichtung bezüglich des Airbagvolumens bzw. des Aufblasverhattens möglich. Ein optimaler Insassenschutz, auch bei Out-of-position-Stellungen, ist hiermit optimal gewährleistet.

In einer bevorzugten Weiterbildung ist ein erster Satz von in etwa parallel zueinander verlaufenden und voneinander beabstandeten ersten Sensorstreifen und ein zweiter Satz von in etwa parallel zueinander verlaufenden und voneinander beabstandeten zweiten Sensorstreifen vorgesehen, die den ersten Salz von ersten Sensorstreifen überkreuzen. Hier handelt es sich um eine bevorzugte Matrixform, bei der auf einfache Weise eine große Fläche des Sensorelements durch den ersten Satz und den zweiten Satz von Sensorstreifen gebildet ist mit optimalen Erfassungsergebnissen.

In einer bevorzugten Ausführungsform überkreuzt der zweite Satz von zweiten Sensorstreifen den ersten Satz von ersten Sensorstreifen so, dass in den an die einzelnen Überkreuzungspunkten angrenzenden Bereichen Lücken ausgebildet sind. Durch die Beabstandung der parallel liegenden Sensorstreifen und die daraus folgenden sich ergebenden Lücken an den angrenzenden Bereichen der Überkreuzungspunkte ist ein mögliches gegenseitiges Verhaken der Sensorstreifen untereinander ausgeschlossen.

Gemäß einer weiteren Ausführungsform weisen die einzelnen Sensorstreifen der einzelnen Sätze jeweils einen in etwa gleichen Abstand voneinander zur Ausbildung eines regelmäßigen Lückenmusters auf. Dadurch ist zur fixierung der Sensorstreifen, wie z. B. durch Vernähen eine Regelmäßigkeit vorgegeben, wodurch der Arbeitsgang der Fixierung erleichtert ist.

In einer besonders bevorzugten Ausführungsform sind die ersten Sensorstreifen zu den zweiten Sensorstreifen um 90° versetzt angeordnet zur Ausbildung von in etwa rechteckförmigen Lücken. Damit ist eine regelmäßige Fixierung der Sensorstreifen von rechteckförmiger Lücke zu rechteckförmiger Lücke möglich. Bei dieser Art der Anordnung der ersten und der zweiten Sensorstreifen ist eine Auswertung der Detektion bei Kontaktierung eines Fahrzeuginsassen mit dem Airbag einfach möglich, da der exakte Detektionsort wie in einem Koordinatensystem zuordenbar ist.

Gemäß einer weiteren Ausführungsform ist zu beiden Seiten der Sensorstreifen wenigstens im Airbag-Aufprallbereich jeweils wenigstens eine die Airbag-Außenhaut und die Airbag-Innenhaut bildende Gewebelage vorgesehen, die die Sensorstreifen abdecken und zwischen sich aufnehmen. Dadurch ist einerseits ein Schutz der Sensorstreifen während der Herstellung und während des bestimmungsgemäßen Gebrauchs des Airbags gegeben und andererseits eine erste Lagefixierung der Sensorstreifen zwischen der Airbag-Außenhaut und der Airbag-Innenhaut ausgebildet.

In einer besonders bevorzugten Ausgestaltung ist der Airbag als One-pieoe-woven-Airbag ausgeführt dergestalt; dass die Sensorstreifen in das Airbag-Gewebe miteingewoben sind. Dabei können bestimmte Bereiche des Airbags, in denen die Sensorstreifen angeordnet sind, zum Teil auch zweilagig zur Ausbildung von Taschen oder dergleichen hergerichtet sein. Durch die miteingewobenen Sensorstreifen in das Airbag-Gewebe ist ein Airbag geschaffen, der einerseits aufgrund der Webtechnik optimale Funktionseigenschaften bietet und andererseits aufgrund der Sensorstreifen ein funktionssichere Detektion von aktuellen Crashparametern im Fahrzeuginnenraum liefert.

Gemäß einer Weiterbildung sind die Sensorstreifen vorzugsweise zwischen zwei Lagen des Airbag-Gewebes des One-piece-woven-Airbags miteingewoben. Dadurch sind die Sensorstreifen durch die zwei Lagen des Airbag-Gewebes einerseits während des Herstellprozesses und während des bestimmungsgemäßen Gebrauchs des Airbags geschützt und andererseits ist eine Art der Vorfixierung der Sensorstreifen gegeben.

In einer weiteren Ausführungsform sind die zwei Lagen des Airbag-Gewebes des One-piece-woven-Airbags wenigstens an einer der Lücken, die an die Überkreuzungspunkte des ersten Satzes von ersten Sensorstreifen und des zweiten Satzes von zweiten Sensorstreifen angrenzen, miteinander verwoben. Mit der Ausnutzung der Lücken, die an die Überkreuzungspunkte der Sensorstreifen angrenzen, zum Verweben der zwei Lagen des Airbag-Gewebes, ist eine sichere Endfixierung der Sensorstreifen gewährleistet und der Webvorgang ist bei einem regelmäßigen Lückenmuster einfach durchführbar.

In einer alternativen Ausgestaltung sind die auf gegenüberliegenden Seiten der Sensorstreifen liegenden Gewebelagen miteinander vernäht. Die beim Überkreuzen der ersten und zweiten Sensorstreifen ausgebildeten Lücken bilden dabei Durchtrittsöffnungen für die Nähte, vorzugsweise auch zur Lagefixierung der Sensorstreifen. Damit ist eine endgültige Lagefixierung der Sensorstreifen zwischen den beiden Gewebelagen einfach herstellbar. Eine zusätzliche Fixierung, wie z. B. durch Kleben, kann somit entfallen.

Bei einer Weiterbildung überkreuzen die ersten und zweiten Sensorstreifen einander so, dass mehrere in etwa parallel und beabstandet voneinander verlaufende Lückenreihen ausgebildet sind. Damit ist ein Vernähen der Gewebelagen entlang wenigstens eines Teiles der gebildeten Lückenreihen durchführbar. Dies ist im Hinblick auf eine Automatisierung des Vemähens der Gewebelagen ein wichtiger Aspekt.

Bei einer Weiterbildung unterkreuzt die Naht in Nährichtung gesehen einen ersten Teil von ersten und/oder zweiten Sensorstreifen und überkreuzt einen zweiten Teil von ersten und/oder zweiten Sensorstreifen. D. h., dass die Naht von Lücke zu Lücke gesehen die Sensorstreifen abwechselnd über- und unterkreuzt. Damit ist eine sichere Lagefixierung der Sensorstreifen gewährleistet. Mit nur einer Nährichtung ist grundsätzlich die Lagefixierung der Sensorstreifen des ersten Satzes und der über Kreuz verlaufenden Sensorstreifen des zweiten Satzes möglich.

In einer Weiterbildung verlaufen die Nähte in eine Nährichtung parallel zu den ersten und/oder zweiten Sensorstreifen und/oder sind die Nähte quer über und unter die Überkreuzungspunkte der ersten und zweiten Sensorstreifen geführt. Damit ist ein Verletzen der Sensorstreifen während des Nähvorgangs ausgeschlossen. Durch die parallele Ausrichtung der ersten und der zweiten Sensorstreifen und die regelmäßige Beabstandung zwischen diesen beiden Sensorstreifen ist ein eindeutiger genau definierter Nähabstand hergestellt.

In einer bevorzugten Ausführungsform ist auf den einzelnen Sensorstreifen jeweils eine Mehrzahl von druckempfindlichen Sensoren angeordnet. Dadurch ist auf der kompletten Länge des einzelnen Sensorstreifens eine Detektion einer Druckänderung möglich und dementsprechend kann ein Sensorsignal an die Steuereinrichtung weitergeleitet werden.

Gemäß einer weiteren Ausführungsform weisen die Sensorstreifen des jeweiligen Satzes von Sensorstreifen jeweils vorzugsweise eine in etwa gleiche Länge auf und sind jeweils endseitig mit einer Steuerleitung verbunden, die zur Steuereinrichtung geführt ist. Damit ist trotz der Vielzahl von Sensoren, die auf den einzelnen Sensorstreifen angeordnet sind, eine einfache und übersichtliche Verkabelung herstellbar.

Gemäß einer weiteren Ausführungsform ist die Fülleinrichtung als herkömmlicher Gasgenerator ausgebildet.

Vorzugsweise ist vorgesehen, dass das elektrisch leitende Element streifenförmig ist und entlang einer Zeile oder Spalte der Kontaktbereiche angeordnet ist. Dadurch wird jeder Kontaktbereich einer Zeile bzw. Spalte durch ein elektrisch leitendes Element spannungsbeaufschlagt. Es muss nicht mehr jeder Kontaktbereich einzeln mit einem elektrisch leitenden Element kontaktiert werden, so dass der Fertigungsaufwand reduziert wird. Besonders einfach wird die Kontaktierung erreicht, wenn das streifenförmige elektrisch leitende Element entlang einem streifenförmigen Widerstandselement in Kontakt zu diesem angeordnet ist. Hierbei ist das betreffende Widerstandselement zumindest über einen Teil seiner Länge und damit auch jeder in diesem Teil der Länge des Widerstandselements befindliche Kontaktbereich durch das elektrisch leitende Element kontaktiert. Hieraus resultiert eine weitere Reduzierung des Fertigungsaufwands.

Eine weitere vorteilhafte Weiterbildung der Erfindung sieht vor, dass das elektrisch leitende Element eine in ein Widerstandselement eingebettete elektrisch leitende Faser ist. Durch die Einbettung in das Widerstandselement wird auf besonders zuverlässige Art erreicht, dass das betreffende Widerstandselement mit dem als Faser ausgebildeten elektrisch leitenden Element in elektrischem Kontakt ist und der Kontaktbereich oder die Kontaktbereiche des Widerstandselements spannungsbeautschlagt werden können. Besonders vorteilhaft ist dabei, wenn die Widerstandselemente streifenförmig ausgebildet sind und sich die elektrisch leitende Faser zumindest über einen Teil der Länge, vorzugsweise über die gesamte Länge mindestens eines der Widerstandselemente erstreckt. Dadurch wird der gesamte Teil der Länge des Widerstandselements und somit alle in diesem Teil der Länge befindlichen Kontaktbereiche durch die Faser kontaktiert und spannungsbeaufschlagt. Es ist des weiteren von Vorteil, wenn die elektrisch leitende Faser im Widerstandselement mäanderförmig verläuft. Dadurch wird in vorteilhafter Art und Weise erreicht, dass bei einer Dehnung des Widerstandselements, wie sie beispielsweise bei einer Druckbeaufschlagung eines Airbags auftreten kann, lediglich das Mäander der Faser auseinander gezogen wird, ohne dass diese mit Zugkräften beaufschlagt wird und abreißen kann.

Es kann vorgesehen sein, dass zumindest an einem Teil der Kontaktbereiche zwischen zwei Widerstandselementen ein Element aus einem schlecht leitfähigen Material angeordnet ist. Dies erhöht den elektrischen Widerstand zwischen den beiden Widerstandselementen an deren Kontaktbereich, so dass eine Druckbeaufschlagung des Kontaktbereichs eine größere absolute Widerstandsänderung hervorruft, als wenn die Widerstandselemente an diesem Kontaktbereich direkt in Kontakt wären. Daraus resultiert eine erhöhte Messgenauigkeit des Sensors. Besonders effektiv wird diese Widerstandserhöhung erreicht, wenn das Element aus schlecht leitfähigem Material die gesamte Fläche des betreffenden Kontaktbereichs abdeckt. Dadurch wird verhindert, dass die beiden Widerstandselemente an diesem Kontaktbereich miteinander in Kontakt kommen können.

Es kann vorgesehen sein, dass das Element oder die Elemente aus schlecht leitfähigem Material streifenförmig ausgebildet ist oder sind und entlang einem oder mehreren streifenförmigen Widerstandselementen angeordnet ist bzw. sind. Dadurch werden mehrere, vorzugsweise alle Kontaktbereiche der betreffenden Widerstandselemente durch ein einzelnes durchgehendes Element aus schlecht leitfähigem Material versehen, so dass nicht jeder Kontaktbereich einzeln mit einem solchen Element versehen werden muss. Daraus resultiert eine Verringerung des Fertigungsaufwands.

Es kann vorgesehen sein, dass zwischen den in Zeilen angeordneten Widerstandselementen und den in Spalten angeordneten Widerstandselementen eine Schicht angeordnet ist, welche isolierende Spalten- und Zeilenbereiche sowie durch diese Spalten- und Zellenbereiche abgrenzte, schlecht leitfähige Bereiche aufweisen, welche schachbrettmusterartig angeordnet sind, und welche an den Kontaktbereichen der Widerstandselemente zwischen diesen angeordnet sind. Dadurch wird in vorteilhafter Art und Weise erreicht, dass durch den Einsatz eines einzelnen Bauteils, nämlich der die schlecht leitfähigen Elemente aufweisenden Schicht, zwischen den Widerstandselementen an einer Vielzahl, vorzugsweise an allen Kreuzungsbereichen, ein Element aus einem schlecht leitfähigen Material angeordnet ist, wobei diese Elemente aus einem schlecht leitfähigen Material gegeneinander elektrisch isoliert sind. Daraus resultiert eine weitere Reduzierung des Fertigungsaufwands.

Eine vorteilhafte Weiterbildung der Erfindung sieht vor, dass das matrixartige Raster in einem Gewebe, insbesondere einem Airbaggewebe, angeordnet ist, und dass an diesem Gewebe Elektroden befestigt sind, welche in Zeilen und Spalten angeordnet sind, und welche wiederum die elektrisch leitenden Elemente kontaktieren. Durch die Integration in ein Gewebe wird erreicht, dass der. Sensor leicht an seinem Einsatzort einbaubar ist Vorzugsweise ist dabei vorgesehen, dass der Sensor bereits in ein Bauteil integriert ist, an dem eine Druckbeaufschlagung gemessen werden soll. Die Anordnung von Elektroden in dem Gewebe, welche die elektrisch leitenden Elemente kontaktieren, bewirkt, dass bei eventuell auftretenden Rissen in den elektrisch leitenden Elementen diese Risse durch die Elektroden überbrückt werden, wodurch eine noch zuverlässigere Spannungsbeaufschlagung der Kontaktbereiche an den Widerstandselementen erreicht wird.

Es kann vorgesehen sein, dass mehrere, vorzugsweise alle in Spalten und/oder mehrere, vorzugsweise alle In Zeilen angeordneten Widerstandselemente in eine flächenförmige Anordnung integriert sind und durch elektrisch isolierende Bereiche voneinander getrennt sind. Dies bewirkt eine Vereinfachung des Fertigungsvorgangs für den erfindungsgemäßen Sensor, da dann nicht mehr jedes Widerstandselement einzeln in den Sensor eingebaut werden muss, sondern mehrere, vorzugsweise alle Widerstandselemente in ein einzelnes Bauteil integriert sind und bei der Fertigung des Sensors nur dieses eine Bauteil in den Sensor eingebaut werden muss.

### Anhand einer Zeichnung wird die Erfindung näher erläutert:

Es zeigen:
- Fig. 1: eine schematische Draufsicht auf über Kreuz gelegte Sensorstreifen,
- Fig. 2: eine schematische Schnittansicht entlang der Linie A-A der Fig. 1,
- Fig. 3: eine schematische Darstellung einer Vemähung von Sensorstreifen,
- Fig.4: eine schematische Darstellung einer alternativen Variante einer Vemähung von Sensorstreifen,
- Fig. 5: eine schematische Darstellung einer weiteren alternativen Variante einer Vernähung von Sensorstreifen,
- Fig. 6: einen stark vergrößerten Schnitt durch einen erfindungsgemäßen Sensor gemäß einem ersten Ausführungsbeispiel,
- Fig. 7: eine Draufsicht auf ein erstes Teil des Sensors gemäß Fig. 6 in Richtung II, teilweise im Schnitt,
- Fig. 8: eine Draufsicht auf ein zweites Teil des Sensors gemäß Fig. 6 in Richtung III, teilweise im Schnitt,
- Fig. 9: eine schematische Darstellung eines erfindungsgemäßen Sensors gemäß einem zweiten Ausführungsbeispiel,
- Fig. 10: eine Draufsicht auf ein flächenförmiges Element, und
- Fig. 11: eine Draufsicht auf eine flächenförmige Anordnung von Widerstandselementen.

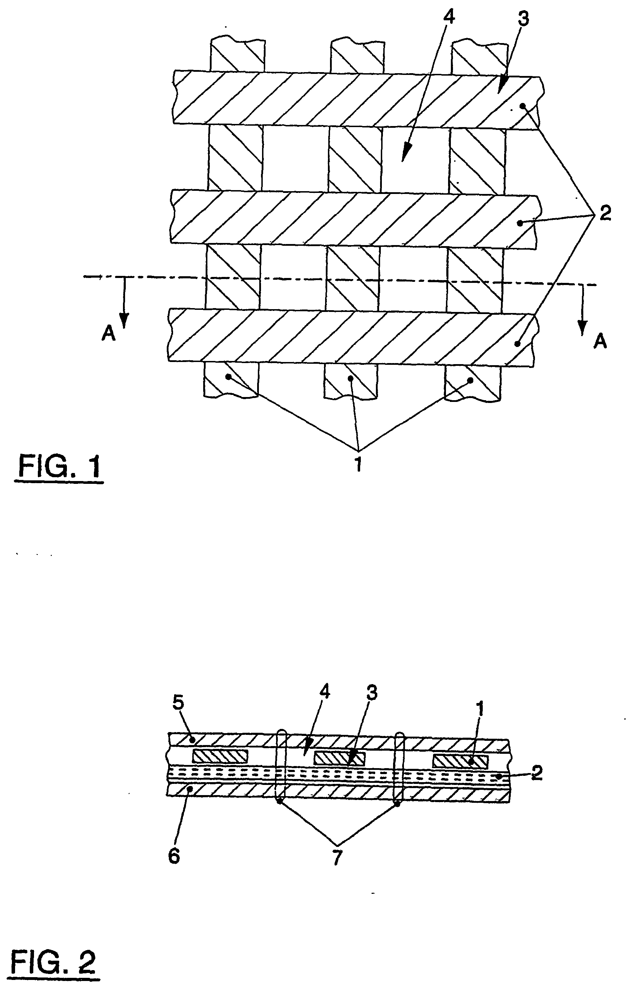

In Fig. 1 ist schematisch eine Draufsicht auf überkreuz gelegte Sensorstreifen 1, 2 dargestellt. Dabei ist ein erster Satz von parallel zueinander verlaufenden und voneinander beabstandeten ersten Sensorstreifen 1 und ein zweiter Satz von zueinander parallel verlaufenden und voneinander beabstandeten zweiten Sensorstreifen 2 überkreuz verlegt. Die beiden Sätze von Sensorstreifen 1 und 2 sind um 90° versetzt angeordnet. Durch die Beabstandung zwischen den einzelnen parallel laufenden Sensorstreifen 1 und 2 von beiden Sätzen sind an den, die einzelnen Überkreuzungspunkte 3 angrenzenden Bereiche, Lücken 4 ausgebildet. Dadurch entstehen parallel verlaufende und voneinander beabstandete Lückenreihen. Eine Vernähung zur Lagefixierung der Sensorstreifen 1 und 2 ist in Fig. 1 aus Übersichtlichkeitsgründen weggelassen, wobei die Lücken 4 Durchtrittsöffnungen für die Vemähung bilden.

In Fig. 2 ist eine schematische Schnittansicht entlang der Linie A-A der Fig. 1 dargestellt. Die überkreuz verlegten Sensorstreifen 1 und 2 sind von der einen Seite von einer Airbag-Außenhaut 5 und von der anderen Seite von einer Airbag-Innenhaut 6 abgedeckt, so dass die Sensorstreifen zwischen den beiden Airbaghäuten 5 und 6 aufgenommen sind. Die beim Überkreuzen der ersten und zweiten Sensorstreifen 1 und 2 ausgebildeten Lücken 4 bilden Durchtrittsöffnungen für eine Naht 7. Dabei werden die auf gegenüberliegenden Seiten der Sensorstreifen 1 und 2 angeordneten Gewebelagen, die die Airbag-Außenhaut 5 und die Airbag-Innenhaut 6 bilden, miteinander vernäht.

Grundsätzlich ist die Verbindung zwischen den beiden Gewebelagen, der Airbag-Außenhaut 5 und der Airbag-Innenhaut 6, auch mit alternativen Mitteln möglich. So ist z. B. die Herstellung des Airbags mit der One-piece-woven-Technik möglich. Dabei wird ein zweilagig verwobener, nahtloser Airbag hergestellt, in den die Sensorstreifen miteingewoben sind.

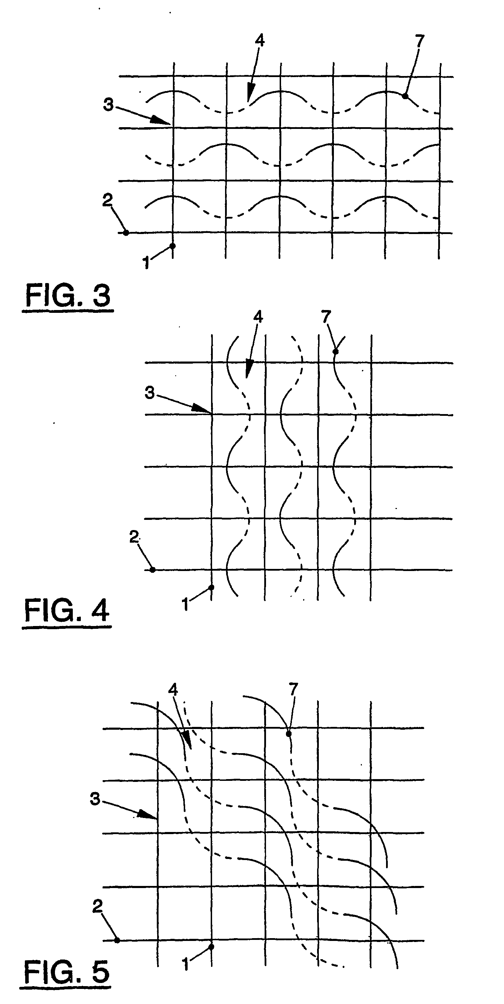

In den Fig. 3 bis 5 sind jeweils unterschiedliche Varianten der Vernähung der Sensorstreifen 1 und 2 dargestellt. In Fig. 3 verläuft die Nährichtung der Nähte 7 parallel zu den ersten Sensorstreifen 1, in Fig. 4 verläuft die Nährichtung der Nähte 7 parallel zu den zweiten Sensorstreifen 2 und in Fig. 5 verläuft die Nährichtung der Nähte diagonal zu den beiden überkreuz liegenden Sensorstreifen 1 und 2. Bei jeder Nähvariante werden die Sensorstreifen von Lücke zu Lücke 4 gesehen abwechselnd von der Naht 7 über- und unterkreuzt. Die Airbag-Außenhaut 5 bzw. die Airbag-Innenhaut 6 ist in den Fig. 3 bis 5 aus Übersichtlichkeitsgründen nicht mit dargestellt. Grundsätzlich ist auch eine Kombination der drei Varianten von Nährichtungen möglich.

Durch die Überkreuzverlegung der ersten Sensorstreifen 1 und der zweiten Sensorstreifen 2 ist ein Sensorelement gebildet, mit dem Druckänderungen, die durch Auftreffen des Airbags auf ein im Weg befindliches Objekt entstehen, sensiert und zu einer Steuereinrichtung weitergeleitet werden. Durch die Art der Verlegung der Sensorstreifen, nämlich nebeneinander und überkreuz, ist eine sogenannte Sensormatrix gebildet, mit der die Positionsbestimmung des auftreffenden Hindernisses einfach und genau möglich ist. Dadurch kann die von einer Fülleinrichtung gelieferte Gasmenge in Reaktion auf das Sensorsignal die Vorschubbewegung des Airbags steuern. Dies erhöht den Insassenschutz speziell bei Out-of-position-Stellungen.

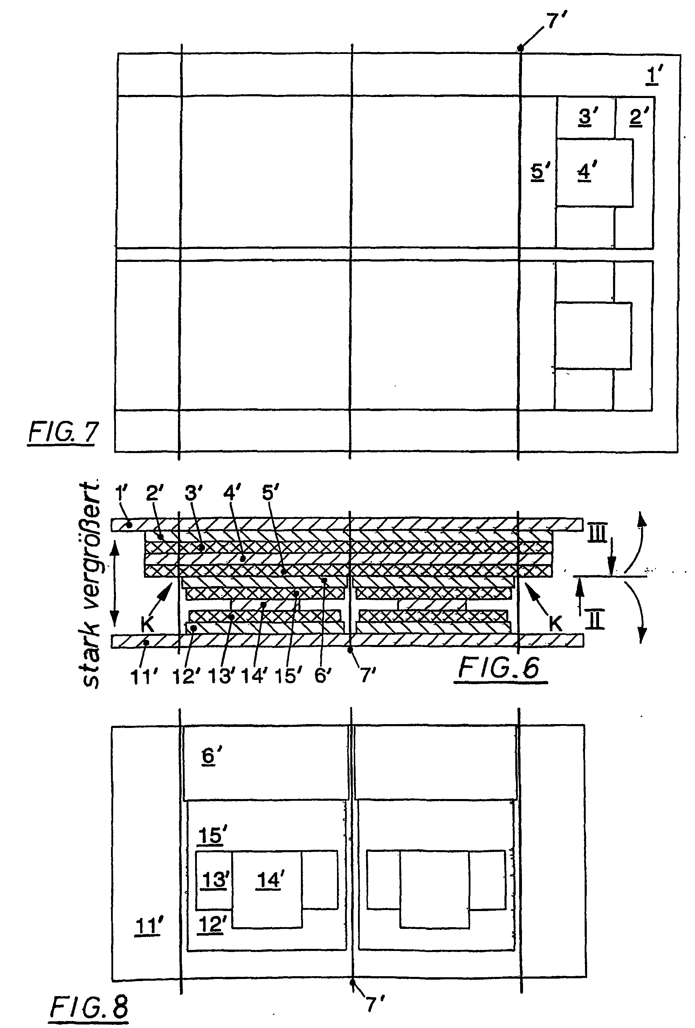

Die Figuren 6 bis 8 zeigen ein erstes Ausführungsbeispiel eines erfindungsgemäßen Sensors. Der Sensor weist streifenförmige, in Zeilen angeordnete Widerstandselemente 5' und streifenförmige, in Spalten angeordnete Widerstandselemente 15' auf, welche einander so überlappen, dass sie ein matrixartiges Raster von Kontaktbereichen K ausbilden. An den Kontaktbereichen K ist zwischen den in Zeilen angeordneten Widerstandselementen 5' und den in Spalten angeordneten Widerstandselementen 15' jeweils ein Element 6' aus einem schlecht leitfähigen Material angeordnet, das den gesamten betreffenden Kontaktbereich K abdeckt. Im hier gezeigten Ausführungsbeispiel sind die Elemente 6' aus schlecht leitfähigem Material ebenfalls streifenförmig ausgebildet und verlaufen entlang den streifenförmig ausgebildeten, in Spalten angeordneten Widerstandselementen 15'.

Längs zu den Widerstandselementen 5', 15' und im Kontakt mit diesen sind streifenförmige elektrisch leitende Elemente 4', 14' aus einem gut leitenden Material, im hier gezeigten Ausführungsbeispiel aus Metall, angeordnet, so dass über diese elektrisch leitenden Elemente 4', 14' die Widerstandselemente 5', 15' und somit auch die Kontaktbereiche K an den Widerstandselementen 5', 15' spannungsbeaufschlagbar sind. Der hier gezeigte Sensor ist hier beispielhaft in ein Airbaggewebe integriert, welches Deckschichten 1', 11' aufweist, an welchen der Sensor mittels Klebeschichten 2', 12' befestigt ist. Der Sensor weist des weiteren Elektroden 3', 13' auf, welche aus Metall gefertigt sind, und welche entlang den streifenförmigen elektrisch leitenden Elementen 4', 14' verlaufen und mit diesen in Kontakt sind. Die elektrisch leitenden Elemente 4', 14', oder alternativ die Elektroden 3', 13' sind über Anschlussleitungen (hier nicht gezeigt) mit einer Auswertevorrichtung verbindbar. Das Gewebe wird durch Nähte 7' zusammengehalten, welche gleichzeitig die Spalten, welche die in Spalten angeordneten Elektroden 13', die in Spalten angeordneten elektrisch leitenden Elemente 14' und die in Spalten angeordneten Widerstandselemente 15' sowie die Elemente 6' aus schlecht leitfähigem Material aufweisen, voneinander trennen.

Das Messprinzip des Sensors, welches im Wesentlichen dem Messprinzip des aus der DE 198 26 484 bekannten Sensors entspricht, beruht nun darauf, dass in den Kontaktbereichen K die Widerstandselemente 5', 15' und das zwischen diesen angeordnete Element 6' aus einem schlechtleitfähigen Material im Wesentlichen nur lose miteinander in Kontakt sind. Bei einer Druck- oder Kraftbeaufschlagung an dem betreffenden Kontaktbereich K werden das Widerstandselement 5' der Zeile, das Element 6' und das Widerstandselement 15' der Spalte zusammengepresst. Dies bewirkt eine Abnahme des elektrischen Widerstands zwischen dem Widerstandselement 5' der Zeile und dem Widerstandselement 15' der Spalte an deren Kontaktbereich K. Über eine Messung des Widerstands kann somit die Gräße der Druck- oder Kraftbeaufschlagung des Kontaktbereichs K bestimmt werden. Bei einer Spannungsbeaufschlagung des Kontaktbereichs K ist das Messsignal der Widerstandsmessung der durch den Kontaktbereich K vom Widerstandselement 5' der Zeile zum Widerstandselement 15' der Spalte fließende Strom.

Die direkte Spannungsbeaufschlagung der Kontaktbereiche K durch die Metallstreifen 4', 14' hat gegenüber dem aus der DE 198 86 484 bekannten Sensor den zusätzlichen wesentlichen Vorteil, dass ein elektrisches Messsignal, in diesem Fall der den Widerstand charakterisierende Strom durch den Kontaktbereich K, nicht über die relativ hochohmigen Widerstandselemente 5', 15' selbst abgeleitet werden muss, sondern über die mit dem Kontaktbereich K in Kontakt befindlichen niederohmigen Metallstreifen 4', 14'. Die Widerstandselemente 5', 15' bilden somit lediglich, im Zusammenwirken mit den zwischen ihnen befindlichen schlecht leitfähigen Elementen 6', an den Kontaktbereichen K elektrische Widerstände aus, die durch Kraft- oder Druckbeaufschlagung veränderbar sind und somit geeignet sind, eine Kraft- oder Druckbeaufschlagung der Kontaktbereiche K zu charakterisieren. Die Kontaktbereiche K sind somit über die Metallstreifen 4', 14' und weitere Anschlussleitungen (hier nicht gezeigt) direkt mit der Auswertevorrichtung verbindbar.

Die Metallstreifen 4', 14' sind dabei nicht vollflächig an den streifenförmigen Widerstandselementen 5', 15' fixiert, sondern liegen an diesen lose an oder sind nur punktuell an diesen fixiert, um eine Beschädigung der Metallstreifen 4', 14' zu vermeiden, wenn die Widerstandselemente 5', 15' infolge Druckbeaufschlagung gedehnt werden. Im Fall einer dennoch auftretenden Beschädigung eines Metallstreifens 4', 14' beispielsweise durch Risse, werden solche Beschädigungen durch die Elektroden 3', 13' elektrisch überbrückt. Die Elektroden 3', 13' erhöhen somit die Zuverlässigkeit des Sensors, sind aber nicht zwingend erforderlich. Im hier gezeigten Ausführungsbeispiel sind die Metallstreifen 4', 14' mit den Zeilen- bzw. Spaltenleiterbahnen 5', 15' im Wesentlichen über deren gesamte Länge in Kontakt. Es kann jedoch auch vorgesehen sein, die elektrisch leitenden Elemente 4', 14' so auszubilden und anzuordnen, dass sie lediglich ausgewählte Kontaktbereiche K kontaktieren.

Es ist beim hier gezeigten Ausführungsbeispiels vorgesehen, die Widerstandselemente 5', 15' an jedem Kontaktbereich K durch ein schlecht leitendes Element 6' zu trennen. Es ist jedoch auch möglich, Elemente 6' nur an einzelnen Kontaktbereichen K vorzusehen oder ganz wegzulassen. Dabei bleibt das Messprinzip dasselbe, bei einem direkten Kontakt zwischen zwei Widerstandselementen 5', 15' ist der elektrische Widerstand im Kontaktbereich K jedoch wesentlich kleiner, so dass bei einer Druckbeaufschlagung nur eine wesentlich geringere absolute Widerstandsänderung gemessen werden kann. Des weiteren kann vorgesehen sein, die Elemente 6' nicht streifenförmig auszubilden, sondern lediglich in der Größe, dass sie den jeweiligen Kontaktbereich K abdecken.

Durch die Trennung der Spalten 6', 12', 13', 14', 15' mittels Nähte 7' wird erreicht, dass benachbarte Spalten nicht verrutschen, und dass kein elektrischer Kurzschluss zwischen benachbarten Spalten zustande kommt, welcher das Messergebnis verfälschen könnte. Ebenso kann vorgesehen sein, was hier nicht gezeigt ist, dass Zeilen voneinander durch Nähte getrennt sind.

Im hier dargestellten Ausführungsbeispiel weist der Sensor zwei Zeilen und zwei Spalten auf. Diese Darstellung wurde der Anschaulichkeit halber gewählt, wobei ein erfindungsgemäßer Sensor in der Regel mehr als zwei Zeilen und mehr als zwei Spalten aufweist. Das Messprinzip an sich lässt sich jedoch auch verwirklichen, wenn nur eine Spalte und eine Zeile vorhanden sind, welche einen Kontaktbereich K ausbilden.

Es ist nicht zwingend, die Widerstandselemente 5', 15' sowie die elektrisch leitenden Elemente 4', 14' streifenförmig auszubilden. Es kann vielmehr ebenso vorgesehen sein, dass jeder Kontaktbereich K durch ein separates Widerstandselement 5' und ein weiteres separates Widerstandselement 15' gebildet wird, zwischen denen ein Element 6' aus schlecht leitfähigem Material angeordnet sein kann. Ebenso kann vorgesehen sein, dass die Widerstandselemente 5', 15' nur an den Kontaktbereichen K durch die elektrisch leitenden Elemente 4', 14' kontaktiert sind. Des weiteren kann vorgesehen sein, dass jeder Kontaktbereich K durch ein separates elektrisch leitendes Element 4' auf der durch das erste Widerstandselement 5' ausgebildeten Seite und durch ein separates elektrisch leitendes Element 14' auf der durch das weitere Widerstandselement 15' ausgebildeten Seite kontaktiert ist.

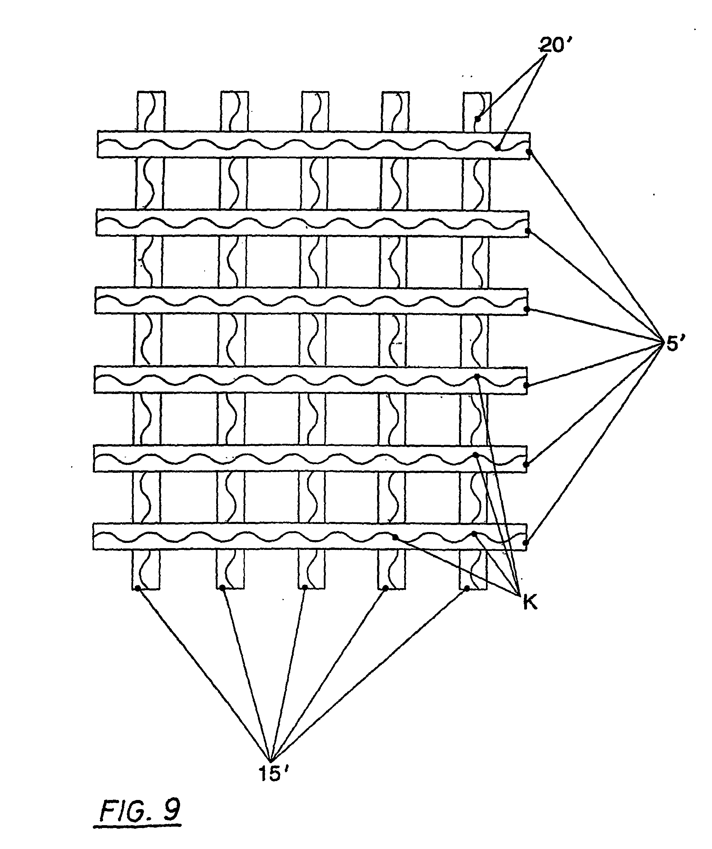

Fig. 9 zeigt schematisch ein zweites Ausführungsbeispiel eines erfindungsgemäßen Sensors. Dieser weist wiederum eine Anzahl streifenförmiger, in Zeilen angeordneter Widerstandselemente 5' sowie eine Anzahl streifenförmiger, in Spalten angeordneter Widerstandselemente 15' auf, die wiederum ein matrixartiges Raster von Kontaktbereichen K bilden. An Stelle der Metallstreifen 4', 14' des ersten Ausführungsbeispiels sind hier elektrisch leitende Fasern 20' in die Widerstandselemente 5', 15' eingebettet. Über die Fasern 20', welche in diesem Ausführungsbeispiel aus Metall ausgebildet sind, sind die Kontaktbereiche K der Widerstandselemente 5', 15' spannungsbeaufschlagbar. Zu diesem Zweck sind die Metallfasern 20' über Anschlussleitungen (hier nicht gezeigt) mit einer Auswerteeinrichtung verbindbar. Die Fasern 20' verlaufen mäanderförmig in den Widerstandselementen 5', 15', so dass bei einer Dehnung der Widerstandselemente 5', 15' lediglich das Mäander der Fasern 20' auseinander gezogen wird, die Fasern 20' jedoch nicht gedehnt oder abgerissen werden. Der Einfachheit halber wurde im zweiten Ausführungsbeispiel auf die Darstellung weiterer Bestandteile des Sensors verzichtet. Es versteht sich von selbst, dass auch der Sensor gemäß dem zweiten Ausführungsbeispiel an den Kontaktpunkten K ein oder mehrere Elemente 6' aus schlechtleitfähigem Material zwischen den Widerstandselenienten 5', 15' aufweisen kann, sowie in ein Gewebe integriert und an diesem fixiert sein kann, wie bereits beim ersten Ausführungsbeispiel beschrieben. Wie schon beim ersten Ausführungsbeispiel ist es auch hier nicht unbedingt erforderlich, dass die Widerstandselemente 5', 15', wie in Fig. 9 gezeigt, über ihre gesamte Länge durch Fasern 20' kontaktiert werden. Es kann durchaus ausreichend sein, wenn die Widerstandselemente 5', 15' durch die Fasern 20' nur an den Kontaktbereichen K oder an ausgewählten Kontaktbereichen K kontaktiert werden.

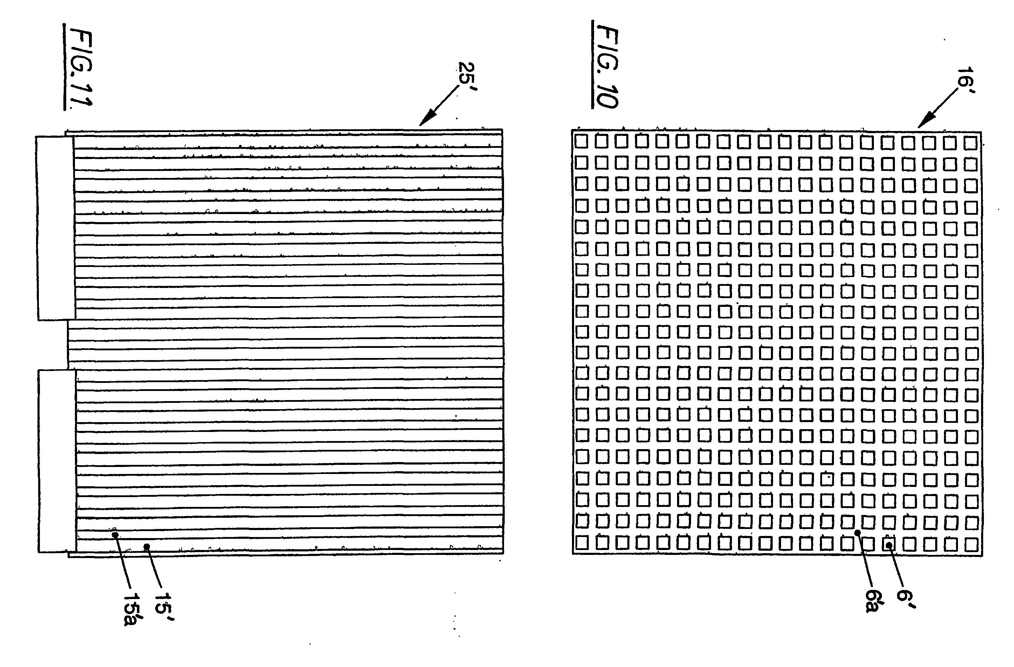

Fig. 10 zeigt eine vom ersten Ausführungsbeispiel abweichende Ausgestaltung der Elemente 6' aus schleicht leitfähigem Material. In diesem Fall sind die Elemente 6' aus schlecht leitfähigem Material nicht streifenförmig ausgebildet, sondern als Bestandteile einer flächenförmigen Schicht 16'. Die Schicht 16' weist mehrere Elemente 16' aus schlecht leitfähigem Material auf, deren Anzahl der Anzahl von Kontaktbereichen K des Sensors entspricht. In der Schicht 16' sind die Elemente 6' aus schlecht leitfähigem Material schachbrettmusterartig angeordnet und von einander durch Spalten- und Zeilenbereiche 6'a aus einem isolierenden Material abgegrenzt. Die Integration der Elemente 6' aus schlecht leitfähigem Material in die Schicht 16' hat den Vorteil, dass die Schicht 16' bei der Herstellung des Sensors als Ganzes zwischen die Widerstandselemente 5', 15' eingelegt werden kann, woraus sich ein geringerer Fertigungsaufwand ergibt, als wenn einzelne Elemente 6' aus schlecht leitfähigem Material zwischen die Widerstandselemente 5', 15' eingesetzt werden müssen.

Fig. 11 zeigt eine vom ersten Ausführungsbeispiel abweichende Anordnung von streifenförmigen Widerstandselementen 15'. Diese sind integrale Bestandteile einer flächenförmigen Anordnung 25', in der die Widerstandselemente 15' durch isolierende Bereiche 15'a voneinander abgegrenzt sind. Hierbei ergibt sich, wie schon bei der die Elemente 6' aus schlecht leitfähigem Material enthaltenden Schicht 16' der Vorteil, dass die Widerstandselemente 15' bei der Herstellung des Sensors nicht einzeln in diesen eingebracht werden müssen, sondern dass nur die flächenförmige Anordnung mit den Widerstandselementen 15' als Einbauteil in den Sensor eingebracht werden muss. Daraus ergibt sich ebenfalls ein reduzierter Fertigungsaufwand des Sensors.

## Patentansprüche

1. Airbagvorrichtung für ein Fahrzeug, insbesondere für ein Kraftfahrzeug, mit einem durch eine Fülleinrichtung mit Gas aufblasbaren Airbag, der beim Aufblasen in den Fahrgastraum des Kraftfahrzeuges vorschiebbar ist und mit wenigstens einem, auf der sich dem Insassen zubewegenden Seite des Airbags befindlichen Sensorelement (1, 2; 5', 15'), das auf lokale Druckänderungen anspricht und diese sensierten Druckänderungen als Sensorsignal an eine Steuereinrichtung weiterleitet, die die Fülleinrichtung durch ein Steuersignal steuert, wobei das wenigstens eine Sensorelement durch sich überkreuzende und Druckänderungen erfassende Sensorstreifen (1, 2; 5', 15') als Widerstandselemente gebildet ist, welche ein matrixartiges Raster mit Zeilen und Spalten voneinander beabstandeter Kontaktbereiche (K) der Widerstandselemente (1, 2; 5', 15') ausbilden, wobei ein elektrischer Widerstand an einem Kontaktbereich (K) zweier Widerstandselemente (1, 2; 5', 15') von der Kraft- oder Druckbelastung des Kontaktbereichs (K) abhängig ist, **dadurch gekennzeichnet, dass** zumindest eines der Widerstandselemente (1, 2; 5', 15') zumindest an einem der Kontaktbereiche (K) durch ein an diesem Kontaktbereich (K) mit dem Widerstandselement (1, 2; 5', 15') in elektrischem Kontakt befindliches, elektrisch leitendes, niederohmiges Element (4', 14'; 20') spannungsbeaufschlagt ist, und
dass die von der Fülleinrichtung gelieferte Gasmenge in Reaktion auf ein Sensorsignal, das von dem die Vorschubbewegung des Airbags erfassenden Widerstandselementen (1, 2; 5', 15') lieferbar ist, steuerbar ist.

2. Airbagvorrichtung nach Anspruch 1, **dadurch gekennzeichnet, dass** ein erster Satz von in etwa parallel zueinander verlaufenden und voneinander beabstandeten ersten Sensorstreifen (1) vorgesehen ist, und dass ein zweiter Satz von in etwa parallel zueinander verlaufenden und voneinander beabstandeten zweiten Sensorstreifen (2) vorgesehen ist, die den ersten Satz von ersten Sensorstreifen (1) überkreuzen.

3. Airbagvorrichtung nach Anspruch 2, **dadurch gekennzeichnet, dass** der zweite Satz von zweiten Sensorstreifen (2) den ersten Satz von ersten Sensorstreifen (1) so überkreuzt, dass in den an die einzelnen Überkreuzungspunkten (3) angrenzenden Bereichen Lücken (4) ausgebildet sind.

4. Airbagvorrichtung nach Anspruch 3, **dadurch gekennzeichnet, dass** die einzelnen Sensorstreifen (1, 2) der einzelnen Sätze jeweils einen in etwa gleichen Abstand voneinander aufweisen zur Ausbildung eines regelmäßigen Lückenmusters.

5. Airbagvorrichtung nach Anspruch 3 oder 4, **dadurch gekennzeichnet, dass** die ersten Sensorstreifen (1) zu den zweiten Sensorstreifen (2) um 90° versetzt angeordnet sind zur Ausbildung von in etwa rechteckförmigen Lücken (4).

6. Airbagvorrichtung nach einem der Ansprüche 1 bis 5, **dadurch gekennzeichnet, dass** zu beiden Seiten der Sensorstreifen (1, 2) wenigstens im Airbag-Aufprallbereich jeweils wenigstens eine die Airbag-Außenhaut (5) und die Airbag-Innenhaut (6) bildende Gewebelage vorgesehen ist, die die Sensorstreifen (1. 2) abdecken und zwischen sich aufnehmen.

7. Airbagvorrichtung nach Anspruch 6, **dadurch gekennzeichnet, dass** der Airbag als One-piece-woven-Airbag ausgeführt ist dergestalt, dass die Sensorstreifen (1, 2) in das Airbag-Gewebe miteingewoben sind.

8. Airbagvorrichtung nach Anspruch 7, **dadurch gekennzeichnet, dass** die Sensorstreifen (1. 2) zwischen zwei vorzugsweise Taschen ausbildenden Lagen des Airbag-Gewebes des One-piece-woven-Airbags miteingewoben sind.

9. Airbagvorrichtung nach Anspruch 8, **dadurch gekennzeichnet, dass** die zwei Lagen des Airbag-Gewebes des One-plece-woven-Airbags wenigstens an einer der Lücken (4), die an die Überkreuzungspunkte (3) des ersten Satzes von ersten Sensorstreifen (1) und des zweiten Satzes von zweiten Sensorstreifen (2) angrenzen, miteinander verwoben sind.

10. Airbagvorrichtung nach Anspruch 6, **dadurch gekennzeichnet, dass** die auf gegenüberliegenden Seiten der Sensorstreifen (1, 2) liegenden Gewebelagen (5, 6) miteinander vemäht sind dergestalt, dass die beim Überkreuzen der ersten und zweiten Sensorstreifen (1, 2) ausgebildeten Lücken (4) Durchtrittsöffnungen für Nähte (7) bilden, vorzugsweise auch zur Lagefixierung der Sensorstreifen (1, 2).

11. Airbagvorrichtung nach Anspruch 10, **dadurch gekennzeichnet, dass** die ersten und zweiten Sensorstreifen (1, 2) einander so überkreuzen, dass mehrere in etwa parallel und beabstandet voneinander verlaufende Lückenreihen ausgebildet sind, mit denen ein Vernähen der Gewebelagen (5, 6) entlang wenigstens eines Teiles der gebildeten Lückenreihen durchführbar ist.

12. Airbagvorrichtung nach Anspruch 11, **dadurch gekennzeichnet, dass** die Naht (7) in Nährichtung gesehen einen ersten Teil von ersten und/oder zweiten Sensorstreifen (1, 2) unterkreuzt und einen zweiten Teil von ersten und/oder zweiten Sensorstreifen (1, 2) überkreuzt.

13. Airbagvorrichtung nach Anspruch 12, **dadurch gekennzeichnet, dass** die Naht (7) von Lücke (4) zu Lücke (4) gesehen die Sensorstreifen (1, 2) abwechselnd über- und unterkreuzt.

14. Airbagvorrichtung nach Anspruch 13, **dadurch gekennzeichnet, dass** die Nähte (7) in eine Nährichtung parallel zu den ersten und/oder zweiten Sensorstreifen (1, 2) verlaufen, und/oder
dass die Nähte (7) quer über und unter die Überkreuzungspunkte (3) der ersten und zweiten Sensorstreifen (1, 2) geführt sind.

15. Airbagvorrichtung nach einem der Ansprüche 2 bis 14, **dadurch gekennzeichnet, dass** die Sensorstreifen (1, 2) des jeweiligen Satzes von Sensorstreifen vorzugsweise jeweils eine in etwa gleiche Länge aufweisen und jeweils endseitig mit einer Steuerleitung verbunden sind, die zur Steuereinrichtung geführt ist.

16. Airbagvorrichtung nach einem der Ansprüche 1 bis 15, **dadurch gekennzeichnet, dass** das elektrisch leitende Element (4', 14') streifenförmig ist und entlang einer Zeile oder Spalte von Kontaktbereichen (K) der Widerstandselemente (5', 15') angeordnet ist.

17. Airbagvorrichtung nach Anspruch 16, **dadurch gekennzeichnet, dass** das streifenförmige elektrisch leitende Element (4', 14') entlang einem streifenförmigen Widerstandselement (5', 15') in Kontakt zu diesem angeordnet ist.

18. Airbagvorrichtung nach Anspruch 16 oder 17, **dadurch gekennzeichnet, dass** das elektrisch leitende Element eine in ein Widerstandselement (5', 15') eingebettete elektrisch leitende Faser (20') ist.

19. Airbagvorrichtung nach Anspruch 18, **dadurch gekennzeichnet, dass** sich die elektrisch leitende Faser (20') zumindest über einen Teil der Länge des streifenförmigen Widerstandselements (5', 15') erstreckt.

20. Airbagvorrichtung nach Anspruch 19, **dadurch gekennzeichnet, dass** die elektrisch leitende Faser (20') im Widerstandselement (5', 15') mäanderförmig verläuft.

21. Airbagvorrichtung nach einem der Ansprüche 1 bis 19, **dadurch gekennzeichnet, dass** zumindest an einem Teil der Kontaktbereiche (K) zwischen den Widerstandselementen (5', 15') ein Element (6') aus einem schlecht leitfähigen Material angeordnet ist.

22. Airbagvorrichtung nach Anspruch 21, **dadurch gekennzeichnet, dass** das Element (6') aus schlecht leitfähigem Material die gesamte Fläche des betreffenden Kontaktbereichs (K) abdeckt.

23. Airbagvorrichtung nach Anspruch 21 oder 22, **dadurch gekennzeichnet, dass** das Element (6') oder die Elemente (6') aus schlecht leitfähigem Material streifenförmig ausgebildet ist bzw. sind und entlang einem oder mehreren streifenförmigen Widerstandselement(en) (5', 15') angeordnet ist bzw. sind.

24. Airbagvorrichtung nach einem der Ansprüche 1 bis 23, **dadurch gekennzeichnet, dass** zwischen den in Zellen angeordneten Widerstandselementen (5') und den in Spalten angeordneten Widerstandselementen (15') eine Schicht (16') angeordnet ist, welche isolierende Spalten- und Zeilenbereiche (6'a) sowie durch diese Spalten- und Zellenbareiche (6'a) abgegrenzte, schlecht leitfähige Elemente (6') aufweist, welche schachbrettmusterartig angeordnet sind, und welche an den Kontaktbereichen (K) der Widerstandselemente (5', 15') zwischen diesen angeordnet sind.

25. Airbagvorrichtung nach einem der Ansprüche 1 bis 24, **dadurch gekennzeichnet, dass** das matrixartige Raster in einem Gewebe (1', 2', 11', 12') angeordnet ist und dass an diesem Gewebe Elektroden (3', 13') befestigt sind, welche in Zeilen und Spalten angeordnet sind, und welche wiederum die elektrisch leitenden Elemente (4', 14') kontaktieren.

26. Airbagvorrichtung nach einem der Ansprüche 1 bis 25, **dadurch gekennzeichnet, dass** mehrere, vorzugsweise alle in Spalten (15') und/oder mehrere, vorzugsweise alle in Zeilen angeordnete Widerstandselemente (5') in eine flächenförmige Anordnung (25') integriert sind und durch elektrisch isolierende Bereiche (15'a) voneinander getrennt sind.

## Claims

1. Airbag device for a vehicle, in particular for a motor vehicle, having an airbag which can be inflated with gas by means of a filling device, can be advanced during the inflation into the passenger compartment of the motor vehicle and has at least one sensor element (1, 2; 5', 15') which is situated on that side of the airbag which moves towards the occupant, and which responds to local pressure changes and passes on these sensed pressure changes as a sensor signal to a control device which controls the filling device by means of a control signal, the at least one sensor element being formed as resistor elements by means of sensor strips (1, 2; 5', 15') which cross over one another and detect pressure changes and form a matrix-like grid having rows and columns of spaced-apart contact regions (K) of the resistor elements (1, 2; 5' 15'), an electrical resistance on a contact region (K) of two resistor elements (1, 2; 5', 15') being dependent on the force or pressure loading of the contact region (K), **characterized in that** at least one of the resistor elements (1, 2; 5', 15') has voltage applied to it at least on one of the contact regions (K) by means of an electrically conductive, low-impedance element (4', 14'; 20') which is in electrical contact with the resistor element (1, 2; 5', 15') on this contact region (K), and **in that** the quantity of gas supplied by the filling device can be controlled in reaction to a sensor signal which can be supplied by the resistor element (1, 2; 5', 15') detecting the advancing movement of the airbag.

2. Airbag device according to Claim 1, **characterized in that** a first set of first sensor strips (1) which run approximately parallel to one another and are spaced apart from one another is provided, and **in that** a second set of second sensor strips (2) which run approximately parallel to one another and are spaced apart from one another is provided, the said second sensor strips crossing over the first set of first sensor strips (1).

3. Airbag device according to Claim 2, **characterized in that** the second set of second sensor strips (2) crosses over the first set of first sensor strips (1) in such a manner that gaps (4) are formed in the regions adjacent to the individual crossing-over points (3).

4. Airbag device according to Claim 3, **characterized in that** the individual sensor strips (1, 2) of the individual sets are in each case at approximately the same distance from one another in order to form a regular pattern of gaps.

5. Airbag device according to Claim 3 or 4, **characterized in that** the first sensor strips (1) are offset through 90° with respect to the second sensor strips (2) in order to form approximately rectangular gaps (4).

6. Airbag device according to one of Claims 1 to 5, **characterized in that** in each case at least one fabric layer forming the airbag outer skin (5) and the airbag inner skin (6) is provided on both sides of the sensor strips (1, 2) at least in the airbag impact region, the fabric layers covering the sensor strips (1, 2) and accommodating them between them.

7. Airbag device according to Claim 6, **characterized in that** the airbag is designed as a one-piece-woven airbag in such a manner that the sensor strips (1, 2) are woven into the airbag fabric.

8. Airbag device according to Claim 7, **characterized in that** the sensor strips (1, 2) are woven between two layers of the airbag fabric of the one-piece-woven airbag, the said layers preferably forming pockets.

9. Airbag device according to Claim 8, **characterized in that** the two layers of the airbag fabric of the one-piece-woven airbag are woven together at least on one of the gaps (4) which are adjacent to the crossing-over points (3) of the first set of first sensor strips (1) and of the second set of second sensor strips (2).

10. Airbag device according to Claim 6, **characterized in that** the fabric layers (5, 6) situated on opposite sides of the sensor strips (1, 2) are stitched together in such a manner that the gaps (4) formed when the first and second sensor strips (1, 2) cross over one another form passage openings for seams (7), preferably also for fixing the position of the sensor strips (1, 2).

11. Airbag device according to Claim 10, **characterized in that** the first and second sensor strips (1, 2) cross over one another in such a manner that a plurality of rows of gaps are formed, the said rows running approximately parallel to one another and spaced apart from one another and with which a stitching of the fabric layers (5, 6) along at least one part of the rows of gaps formed can be carried out.

12. Airbag device according to Claim 11, **characterized in that** the seam (7), as seen in the stitching direction, crosses under a first part of first and/or second sensor strips (1, 2) and crosses over a second part of first and/or second sensor strips (1, 2).

13. Airbag device according to Claim 12, **characterized in that** the seam (7), as seen from gap (4) to gap (4), crosses over and under the sensor strips (1, 2) in alternating fashion.

14. Airbag device according to Claim 13, **characterized in that** the seams (7) run parallel to the first and/or second sensor strips (1, 2) in one stitching direction, and/or **in that** the seams (7) are guided transversely over and under the crossing-over points (3) of the first and second sensor strips (1, 2).

15. Airbag device according to one of Claims 2 to 14, **characterized in that** the sensor strips (1, 2) of the respective set of sensor strips preferably in each case have approximately the same length and are connected in each case on the end side to a control line which is guided to the control device.

16. Airbag device according to one of Claims 1 to 15, **characterized in that** the electrically conductive element (4', 14') is strip-shaped and is arranged along one row or column of contact regions (K) of the resistor elements (5', 15').

17. Airbag device according to Claim 16, **characterized in that** the strip-shaped, electrically conductive element (4', 14') is arranged along a strip-shaped resistor element (5', 15') in contact therewith.

18. Airbag device according to Claim 16 or 17, **characterized in that** the electrically conductive element is an electrically conductive fibre (20') which is embedded in a resistor element (5', 15').

19. Airbag device according to Claim 18, **characterized in that** the electrically conductive fibre (20') extends over at least part of the length of the strip-shaped resistor element (5', 15').

20. Airbag device according to Claim 19, **characterized in that** the electrically conductive fibre (20') runs in a meandering manner in the resistor element (5', 15').

21. Airbag device according to one of Claims 1 to 19, **characterized in that** an element (6') of a poorly conductive material is arranged at least on one part of the contact regions (K) between the resistor elements (5', 15').

22. Airbag device according to Claim 21, **characterized in that** the element (6') of poorly conductive material covers the entire area of the relevant contact region (K).

23. Airbag device according to Claim 21 or 22, **characterized in that** the element (6') or the elements (6') is or are formed in a strip-shaped manner from poorly conductive material and is or are arranged along one or more strip-shaped resistor element(s) (5', 15').

24. Airbag device according to one of Claims 1 to 23, **characterized in that** a layer (16') is arranged between the resistor elements (5') which are arranged in rows and the resistor elements (15') which are arranged in columns, the said layer having insulating column and row regions (6'a) and also poorly conductive elements (6') which are delimited by these column and row regions (6'a) and are arranged in the manner of a chessboard pattern, and which are arranged on the contact regions (K) of the resistor elements (5', 15') between the latter.

25. Airbag device according to one of Claims 1 to 24, **characterized in that** the matrix-like grid is arranged in a fabric (1', 2', 11' 12'), and **in that** electrodes (3', 13') which are arranged in rows and columns and which in turn make contact with the electrically conductive elements (4', 14') are fastened to this fabric.

26. Airbag device according to one of Claims 1 to 25, **characterized in that** a plurality of resistor elements (5'), preferably all of the resistor elements (5'), which are arranged in columns (15') and/or a plurality of resistor elements (5'), preferably all of the resistor elements (5'), which are arranged in rows are integrated in a sheet-like arrangement (25') and are separated from one another by electrically insulating regions (15'a).

## Revendications

1. Dispositif d'airbag pour un véhicule, notamment pour un véhicule automobile, comprenant un airbag pouvant être gonflé avec du gaz par un dispositif de gonflage, qui peut être avancé dans l'habitacle du véhicule automobile lorsqu'il est gonflé et comprenant au moins un élément de capteur (1, 2 ; 5', 15') situé du côté de l'airbag tourné vers le passager, qui réagit à des variations de pression locales et qui transmet ces variations de pression détectées, sous forme de signal de capteur, à un dispositif de commande qui commande le dispositif de gonflage par un signal de commande, l'au moins un élément de capteur étant formé par des bandes de capteur (1, 2 ; 5' 15') se croisant et détectant des variations de pression, servant d'éléments résistants qui constituent une grille de type matrice avec des lignes et des colonnes de régions de contact (K) espacées les unes des autres des éléments résistants (1, 2 ; 5', 15'), une résistance électrique en une région de contact (K) de deux éléments résistants (1, 2 ; 5', 15') dépendant de la sollicitation par force ou par pression de la région de contact (K), **caractérisé en ce qu'**au moins l'un des éléments résistants (1, 2 ; 5', 15') est sollicité en tension au moins en une des régions de contact (K) par un élément à faible impédance (4', 14' ; 20'), électriquement conducteur, se trouvant en contact électrique avec l'élément résistant (1, 2 ; 5', 15') en cette région de contact (K), et
**en ce que** la quantité de gaz fournie par le dispositif de gonflage peut être commandée en réaction à un signal de capteur, qui peut être fourni par l'élément résistant (1, 2 ; 5', 15') détectant le mouvement d'avance de l'airbag.

2. Dispositif d'airbag selon la revendication 1, **caractérisé en ce qu'**il est prévu un premier jeu de premières bandes de capteur (1) s'étendant approximativement parallèlement les unes aux autres et espacées les unes des autres, et **en ce qu'**il est prévu un deuxième jeu de deuxièmes bandes de capteur (2) s'étendant approximativement parallèlement les unes aux autres et espacées les unes des autres, qui croisent le premier jeu de premières bandes de capteur (1).

3. Dispositif d'airbag selon la revendication 2, **caractérisé en ce que** le deuxième jeu de deuxièmes bandes de capteur (2) croise le premier jeu de premières bandes de capteur (1) de telle sorte que des espaces vides (4) soient formés dans les régions adjacentes aux points d'intersection individuels (3).

4. Dispositif d'airbag selon la revendication 3, **caractérisé en ce que** les bandes de capteur individuelles (1, 2) des jeux individuels présentent à chaque fois une distance approximativement égale les unes par rapport aux autres pour former un modèle d'espaces vides régulier.

5. Dispositif d'airbag selon la revendication 3 ou 4, **caractérisé en ce que** les premières bandes de capteur (1) sont disposées de manière décalée de 90° par rapport aux deuxièmes bandes de capteur (2) en vue de former des espaces vides (4) de forme approximativement rectangulaire.

6. Dispositif d'airbag selon l'une quelconque des revendications 1 à 5, **caractérisé en ce que** des deux côtés des bandes de capteur (1, 2), au moins dans la région d'impact de l'airbag, à chaque fois au moins une couche de tissu formant la peau extérieure de l'airbag (5) et la peau intérieure de l'airbag (6) est prévue, ces couches de tissus recouvrant les bandes de capteur (1, 2) et les recevant entre elles.

7. Dispositif d'airbag selon la revendication 6, **caractérisé en ce que** l'airbag est réalisé sous forme d'airbag tissé en une seule pièce, de telle sorte que les bandes de capteur (1, 2) soient intégrées dans le tissu de l'airbag.

8. Dispositif d'airbag selon la revendication 7, **caractérisé en ce que** les bandes de capteur (1, 2) sont intégrées dans le tissu entre deux couches du tissu de l'airbag tissé en une seule pièce formant de préférence des poches.

9. Dispositif d'airbag selon la revendication 8, **caractérisé en ce que** les deux couches du tissu de l'airbag tissé en une seule pièce sont tissées ensemble au moins au niveau de l'un des espaces vides (4) qui sont adjacents aux points d'intersection (3) du premier jeu de premières bandes de capteur (1) et du deuxième jeu de deuxièmes bandes de capteur (2).

10. Dispositif d'airbag selon la revendication 6, **caractérisé en ce que** les couches de tissu (5, 6) situées sur les côtés opposés des bandes de capteur (1, 2) sont cousues ensemble de telle sorte que les espaces vides (4) formés lors du croisement des premières et deuxièmes bandes de capteur (1, 2) forment des ouvertures de passage pour des coutures (7), de préférence aussi pour la fixation en position des bandes de capteur (1, 2).

11. Dispositif d'airbag selon la revendication 10, **caractérisé en ce que** les premières et deuxièmes bandes de capteur (1, 2) se croisent de telle sorte que plusieurs rangées d'espaces vides s'étendant approximativement parallèlement et de manière espacée les unes des autres soient formés, au moyen desquelles on peut effectuer la couture des couches de tissu (5, 6) le long d'au moins une partie des rangées d'espaces vides formées.

12. Dispositif d'airbag selon la revendication 11, **caractérisé en ce que** la couture (7), vue dans la direction de couture, croise par le dessous une première partie des premières et/ou deuxièmes bandes de capteur (1, 2) et croise par le dessus une deuxième partie des premières et/ou deuxièmes bandes de capteur (1, 2).

13. Dispositif d'airbag selon la revendication 12, **caractérisé en ce que** la couture (7), vue d'un espace vide (4) à l'autre (4), croise en alternance par le dessus et par le dessous les bandes de capteur (1, 2).

14. Dispositif d'airbag selon la revendication 13, **caractérisé en ce que** les coutures (7) s'étendent dans une direction de couture parallèlement aux premières et/ou deuxièmes bandes de capteur (1, 2), et/ou
**en ce que** les coutures (7) sont guidées transversalement par-dessus et par-dessous les points d'intersection (3) des premières et deuxièmes bandes de capteur (1, 2).

15. Dispositif d'airbag selon l'une quelconque des revendications 2 à 14, **caractérisé en ce que** les bandes de capteur (1, 2) de chaque jeu de bandes de capteur présentent de préférence à chaque fois une longueur approximativement égale et sont reliées à chaque fois du côté de l'extrémité avec une ligne de commande qui est guidée vers le dispositif de commande.

16. Dispositif d'airbag selon l'une quelconque des revendications 1 à 15, **caractérisé en ce que** l'élément électriquement conducteur (4', 14') est en forme de bande et est disposé le long d'une ligne ou d'une colonne de régions de contact (K) des éléments résistants (5', 15').

17. Dispositif d'airbag selon la revendication 16, **caractérisé en ce que** l'élément électriquement conducteur en forme de bande (4', 14') est disposé le long d'un élément résistant en forme de bande (5', 15') en contact avec celui-ci.

18. Dispositif d'airbag selon la revendication 16 ou 17, **caractérisé en ce que** l'élément électriquement conducteur est une fibre (20') électriquement conductrice intégrée dans l'élément résistant (5', 15').

19. Dispositif d'airbag selon la revendication 18, **caractérisé en ce que** la fibre (20') électriquement conductrice s'étend au moins sur une partie de la longueur de l'élément résistant en forme de bande (5', 15').

20. Dispositif d'airbag selon la revendication 19, **caractérisé en ce que** la fibre (20') électriquement conductrice s'étend en forme de méandre dans l'élément résistant (5', 15').

21. Dispositif d'airbag selon l'une quelconque des revendications 1 à 19, **caractérisé en ce qu'**un élément (6') constitué d'un matériau mauvais conducteur est disposé au moins sur une partie des régions de contact (K) entre les éléments résistants (5', 15').

22. Dispositif d'airbag selon la revendication 21, **caractérisé en ce que** l'élément (6') en matériau mauvais conducteur recouvre toute la surface de la région de contact (K) concernée.

23. Dispositif d'airbag selon la revendication 21 ou 22, **caractérisé en ce que** l'élément (6') ou les éléments (6') est ou sont réalisés en forme de bande en matériau mauvais conducteur et est ou sont disposés le long d'un ou de plusieurs éléments résistants (5', 15') en forme de bande.

24. Dispositif d'airbag selon l'une quelconque des revendications 1 à 23, **caractérisé en ce qu'**entre les éléments résistants (5') disposés en lignes et les éléments résistants (15') disposés en colonnes est disposée une couche (16') qui présente des régions de colonnes et de lignes isolantes (6'a) ainsi que des éléments (6') mauvais conducteurs, délimités par ces régions de colonnes et de lignes (6'a), lesquels sont disposés sous forme de modèle d'échiquier, et sont disposés au niveau des régions de contact (K) des éléments résistants (5', 15') entre ceux-ci.

25. Dispositif d'airbag selon l'une quelconque des revendications 1 à 24, **caractérisé en ce que** la grille de type matrice est disposée dans un tissu (1', 2', 11', 12') et **en ce que** des électrodes (3', 13') sont fixées sur ce tissu, lesquelles sont disposées en lignes et en colonnes et viennent à nouveau en contact avec les éléments électriquement conducteurs (4', 14').

26. Dispositif d'airbag selon l'une quelconque des revendications 1 à 25, **caractérisé en ce que** plusieurs, de préférence tous les éléments résistants disposés en colonnes (15') et/ou plusieurs, de préférence tous les éléments résistants disposés en lignes (5') sont intégrés dans un agencement de forme plane (25') et sont séparés les uns des autres par des régions électriquement isolantes (15'a).
